# EUROPEAN PATENT APPLICATION

(11) **EP 3 179 747 A1**
(43) Date of publication of application: **14.06.2017**
(21) Application number: 15829667.3
(22) Date of filing: 23.07.2015
(51) Int. Cl.: H04W 4/02, G06F 17/30

(54) **INFORMATION PROMPTING METHOD AND APPARATUS IN TERMINAL DEVICE**

(30) Priority: 05.08.2014 CN 201410381880
(71) Applicant: Alibaba Group Holding Limited, Grand Cayman (KY)
(72) Inventor: LIU, Shuyan, Hangzhou Zhejiang 311121 (CN)
(74) Representative: Branderhorst, Matthijs Pieter Arie
(86) International application number: PCT/CN2015/084881
(87) International publication number: WO 2016/019802

(57) **Abstract**

An information prompting method and apparatus in a terminal device is provided, in which the method includes: acquiring geographic location information of a user (S101); recording in a first database a correspondence between geographic location information and time information (S102); upon receiving a request for querying geographic location information of a history time point, determining a target time point to be queried (S103); querying the first database and determining target geographic location information corresponding to the target time point (S104); acquiring target map data corresponding to the target geographic location information from a preset map database (S105); and loading the target map data for display on a user interface (S106). The method can help a user to recall the places the user went to in the past and the time the user went to the places, and the user does not need to perform manual operations like recording.

## Description

### Technical Field

The present application relates to the field of information processing technologies, and in particular, to an information prompting method and apparatus in a terminal device.

### Background Art

In modern society, human beings have increasingly quickened their pace in life and work. Usually, a person needs to arrange a lot of activities and to complete a lot of tasks in a very short time period. However, after all these things have been done, he/she usually cannot remember, and even forgot what detailed things he/she has been engaged in the whole day.

On the other hand, in the current information era, a mobile terminal device has almost become a necessity in people's life. In addition to basic communication functions, the mobile terminal device can further achieve many other additional functions to offer conveniences for people's life in various aspects, including a memo function. In order to avoid forgetting the things that happened in the past, or to remind of things to be done in the future, a user of the mobile terminal device can make records in a memo. However, in such an implementation manner, it is necessary to rely on a user's manual recording operation, and to take the user's additional time. In this case, if the user is extremely busy, he/she may not have time to complete the recording operation. Moreover, some users may not make records in the memo because they are not willing to perform the typewriting operation manually, and till they need to recall things passed, they cannot remember at all, which results in forgetting some important things and the like.

Therefore, how to provide an implementation solution to help users to remember what happened in the past becomes a technical problem to be solved by those skilled in the art urgently.

### Summary of the Invention

The present application provides an information prompting method and apparatus in a terminal device, which can help a user to recall the places the user went to in the past and the time the user went to the places, and the user does not need to perform manual operations like recording.

The present application provides the following solutions:
An information prompting method in a terminal device, including:
   acquiring geographic location information of a user;
   recording in a first database a correspondence between the geographic location information and time information;
   upon receiving a request for querying geographic location information at a history time point, determining a target time point to be queried;
   querying the first database and determining target geographic location information corresponding to the target time point;
   acquiring target map data corresponding to the target geographic location information from a preset map database; and
   loading the target map data for display on a user interface.
An information prompting method in a terminal device, including:
   acquiring coordinate information of a user by a positioning system in the user's mobile terminal device;
   uploading the coordinate information to a server, to enable the server to acquire geographic location information of the user, and recording in a first database a correspondence between the geographic location information and time information;
   upon receiving a request for querying geographic location information at a history time point, determining a target time point to be queried;
   uploading the target time point to the server, to enable the server, through querying the first database, to determine target geographic location information corresponding to the target time point, and acquiring target map data corresponding to the target geographic location information from a preset map database; and
   receiving target map data returned by the server and loading the target map data for display on a user interface.
An information prompting method, including:
   receiving coordinate information uploaded by a client;
   determining real-time geographic location information of a user by using the coordinate information, and recording in a first database a correspondence between the geographic location information and time information;
   upon receiving target time point information to be queried uploaded by the client, querying the first database, and determining target geographic location information corresponding to the target time point; and
   acquiring target map data corresponding to the target geographic location information from a preset map database, and returning the target map data to the client, to enable the client to load the target map data for display on a user interface.
An information prompting apparatus in a terminal device, including:
   a geographic location information acquiring unit, for acquiring geographic location information of a user in real time;
   a correspondence recording unit, for recording in a first database a correspondence between the geographic location information and time information;
   a target time point determining unit, for, upon receiving a request for querying geographic location information at a history time point, determining a target time point to be queried;
   a target geographic location information determining unit, for querying the first database and determining target geographic location information corresponding to the target time point;
   a target map data acquiring unit, for acquiring target map data corresponding to the target geographic location information from a preset map database; and
   a map loading unit, for loading the target map data for display on a user interface.
An information prompting apparatus in a terminal device, including:
   a coordinate information acquiring unit, for acquiring coordinate information of the user by a positioning system in the user's mobile terminal device;
   a coordinate information uploading unit, for uploading the coordinate information to a server, to enable the server to acquire geographic location information of the user, and recording in a first database a correspondence between the geographic location information and time information;
   a target time point determining unit, for, upon receiving a request for querying geographic location information at a history time point, determining a target time point to be queried;
   a target time point uploading unit, for uploading the target time point to the server, to enable the server, through querying the first database, to determine target geographic location information corresponding to the target time point, and acquiring target map data corresponding to the target geographic location information from a preset map database; and
   a map loading unit, for receiving target map data returned by the server and loading the target map data for display on a user interface.
An information prompting apparatus, including:
   a coordinate information receiving unit, for receiving coordinate information uploaded by a client;
   a correspondence recording unit, for determining real-time geographic location information of a user by using the coordinate information, and recording in a first database a correspondence between the geographic location information and time information;
   a querying unit, for, upon receiving target time point information to be queried uploaded by the client, querying the first database, and determining target geographic location information corresponding to the target time point; and
   a target map data providing unit, for acquiring target map data corresponding to the target geographic location information from a preset map database, and returning the target map data to the client, to enable the client to load the target map data for display on a user interface.
According to specific embodiments provided in the present application, the present application discloses the following technical effects:
   Through the embodiments of the present application, a correspondence between geographic location information of a user and time information can be recorded, and then, through designating a time point to be queried, the user can query a place the user went to at a certain time point in the past, which can be shown in a map. Thus, it can help the user to recall the places the user went to in the past and the time the user went to the places, and the user does not need to perform manual operations like recording.

Definitely, any product that implements the present application does not necessarily need to achieve all the above advantages at the same time.

### Brief Description of the Drawings

In order to describe the technical solutions in the embodiments of the present application or the prior art more clearly, the accompanying drawings to be used in the embodiments are briefly introduced below; it is apparent that the accompanying drawings in the following description are merely some embodiments of the present application, and those of ordinary skill in the art can also obtain other accompanying drawings according to the accompanying drawings without making creative efforts.
FIG. 1 is a flow chart of a first method according to an embodiment of the present application;
FIG. 2 is a flow chart of a second method according to an embodiment of the present application;
FIG. 3 is a flow chart of a third method according to an embodiment of the present application;
FIG. 4 is a schematic diagram of a first apparatus according to an embodiment of the present application;
FIG. 5 is a schematic diagram of a second apparatus according to an embodiment of the present application; and
FIG. 6 is a schematic diagram of a third apparatus according to an embodiment of the present application.

### Detailed Description

The technical solutions in the embodiments of the present application are clearly and completely described below with reference to the accompanying drawings in the embodiments of the present application. It is apparent that the embodiments described are merely some, instead of all, of the embodiments of the present application. Based on the embodiments in the present application, all other embodiments obtained by those of ordinary skill in the art shall be encompassed by the protection scope of the present application.

In the embodiments of the present application, a correspondence between the location of a user and the time can be recorded in real time by a mobile terminal device taken along with the user. Thus, when it is necessary to remember what things were done at a certain time point in the past, the location information at the specific time point can be acquired by checking the recorded correspondence, thereby giving a prompt to the user when he/she recalling things. When the location information is prompted, location information of the user can be displayed on a map interface in combination with map data. Thus, the user can acquire information more directly. In specific implementations, in the prior art, a terminal device can locally store an off-line map data packet, or a map database can be stored in a server, and the terminal device presents a map interface based on data returned by the server. In the embodiments of the present application, the above two circumstances both can be implemented. In the case that the terminal device is installed with an off-line map data packet, specific operation flows are all completed by a client; and in the case that the server stores a map database, the client may cooperate with the server to complete specific information prompting procedures. The specific implementation manners are introduced in detail below.

### Embodiment 1

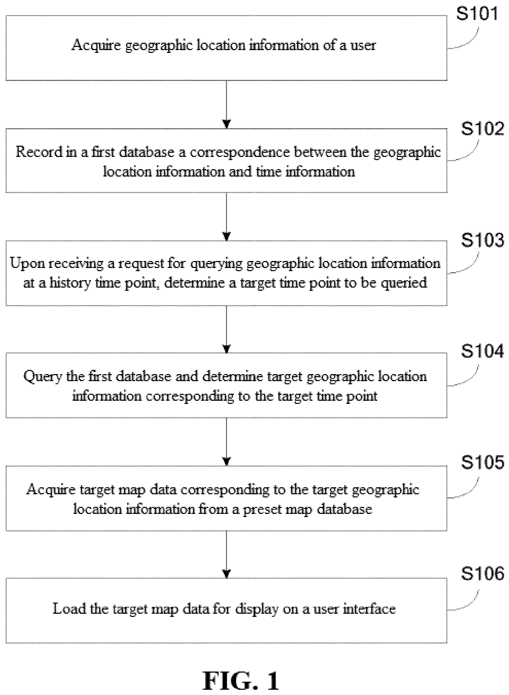

Embodiment 1 mainly introduces a circumstance that a terminal device locally installs an off-line map data packet. In this solution, each step is performed by a client. Referring to FIG. 1, this embodiment provides an information prompting method in a terminal device, which may include the following steps:
S101: Acquire geographic location information of a user;
   Generally, a terminal device of the user is installed with a positioning system (for example, GPS, and the like). Such a positioning system, in a state of being enabled, can detect location information of the user, such as longitude and latitude, and the like, and accordingly, geographic location information of the user can be acquired.
S102: Record in a first database a correspondence between the geographic location information and time information;
   Once the geographic location information is acquired, a correspondence between the geographic location information and current time information can be further acquired and recorded in the first database. In Embodiment 1, the database may be stored locally in the terminal device, so that the client can directly complete the recording operation.

During specific implementations, the geographic location information recorded in the first database may have many forms. For example, in one form, coordinate information (mainly present in the form of information such as longitude and latitude, and the like) acquired from the positioning system is directly stored as geographic location information. In this case, data in the first database may be as shown in Table 1 below:

**Table 1**

| Serial No. | Coordinate Information | Time Information |
|---|---|---|
| 1 | (x1, y1) | Time 1 |
| 2 | (x2, y2) | Time 2 |
| ··· ··· | ··· ··· | ··· ··· |

Specific coordinate information may be indicated by coordinates representing longitude and latitude. Time information may be a time point, or may be a time period range. For example, if a coordinate location of a certain user does not change within a certain time period, a correspondence between the coordinate location and the time in this time period can be recorded in the first database.

When records are made in the above manner, digits may be added in the first database by way of making records periodically, that is, making a record every once in a while, for example, making a record every ten minutes (which may also be longer or shorter). Definitely, in a circumstance that a coordinate location of a user does not change within a certain time period, positioning information acquired within several successive periods may be the same. Thus, the positioning information acquired within the several successive periods may be combined into one record, and added to the first database, which indicates the circumstance that one piece of positioning information corresponds to a time period range.

Definitely, in the above manner, there may be a lot of information entries recorded in the first database, and such positioning information may not be vivid for the users. Therefore, in another implementation manner, after coordinate information of the positioning system is acquired, whether the current location is within a regional range of a certain site may be further determined based on a pre-built second database, and if yes, the information of this site is taken as the geographic location information and is recorded in the first database. The second database stores a correspondence between each site identification and coordinate information of the range of the site. The site mentioned herein may be some coffee shops, shopping malls, and the like (specifically, what site data is stored in the second database may be determined based on actual requirements, and some hot sites may be selected for storage, or to guarantee the coverage rate of the information, some site data may be stored as much as possible). Each site occupies a certain range in terms of geographic location. As long as the coordinate information of a certain user is located within a regional range corresponding to a certain site, it can be considered that the user is located within the site, and furthermore, a correspondence between the site information and time information can be recorded in the first database. At this time, data in the first database may be as shown in Table 2:

**Table 2**

| Serial No. | Site identification Information | Time Information |
|---|---|---|
| 1 | Site A | Time 1 |
| 2 | Site B | Time 2 |
| ··· ··· | ··· ··· | ··· ··· |

One site corresponds to one regional range. When a user appears in a certain specific site, he/she generally goes to the site to do a certain specific thing, and possibly stays there for a certain period of time. Therefore, in the circumstance that site information is used to represent geographic location information of the user, time information is generally represented by using a time period. The time period may be represented by a start time when the user enters the site and an end time, for example, as shown in Table 3:

**Table 3**

| Serial No. | Site identification Information | Time Period Information |
|---|---|---|
| 1 | Site A | Time 1-Time 2 |
| 2 | Site B | Time 3-Time 4 |
| ··· ··· | ··· ··· | ··· ··· |

Therefore, each record in the first database is used to represent the following information: the user stays in a certain site within a certain time period. In this way, when the geographic location information is provided for the user subsequently, the site information may be further provided for the user, so that the user can more directly figure out his/her geographic location information at that time.

The start time and the end time may be acquired in many forms. For example, in one form, the acquisition may be implemented as follows: similarly, positioning information in a terminal device may be acquired periodically, and if it is determined for the first time that the user is located in a certain site A at a certain time point, this time point can be determined as a start time for entering the site A, and then, the positioning information of the user is still acquired periodically. If the acquired site information is still the site A when the next time period comes, the procedure continues, till a certain time point when it is determined that the user enters another site or the user leaves the regional range of the site A based on the acquired coordinate information and the second database. In this case, this time point is determined as an end time of the site A, and so forth.

In such an implementation manner of using the site information to record the geographic location information of the user, the first database records fewer information entries, which provides more valuable reference for the user.

Definitely, in actual applications, if the user passes by a certain geographic location when heading for a certain site, the geographic location information may be useless for the user, because the user may not be truly involved in a certain social activity at this geographic location. Therefore, in the embodiments of the present application, whether positioning information or site information is adopted to record the user's location information, moving state information of the user may be acquired. Moreover, only when the moving speed is determined to be lower than a certain threshold value, a correspondence between the acquired geographic location information and time information can be recorded in the first database. For the moving speed, coordinate information can be acquired periodically when geographic location information of the user is acquired previously. Thus, when moving speed information is acquired, a distance between two points may be calculated firstly based on coordinate information respectively acquired at two adjacent cycles, and then the distance may be divided by a time length of one cycle, which thus obtains a moving speed. Alternatively, in a circumstance that the site information can be acquired, a time length when the user stays in the same site may be further counted. For example, the user stays in a certain site for multiple successive time cycles, which proves that the user's moving speed is rather low or that the user is involved in a certain activity in the site. Thus, it can be recorded in the first database. Otherwise, if it is found that the user enters a regional range of a certain site at a certain time point, but, in the following time cycle, the user no longer stays in the regional range of the site, it proves that the user only passes by the site. Thus, it does not need to be recorded in the first database.

To sum up, through various manners above, a first database can be built locally in a terminal device, and the first database records geographic location information of the user respectively at each time point at past, which can be used for subsequent query.

It should be noted that, in Embodiment 1, the first database is stored locally in a terminal device. If too much data is stored, it may result in that too much local storage space is occupied, thereby affecting the performance of the terminal device. Generally, the user possibly only recalls places the user went to in the recent several days. Therefore, in actual applications, the database only stores records in recent one or several days, and the previous data can be deleted.

S103: Upon receiving a request for querying geographic location information at a history time point, determine a target time point to be queried;

In a circumstance that the first database records various records, the user may query the records at any time. Upon receiving a query request from the user, a target time point to be queried may be determined firstly. In the specific implementation, an input box and to the like may be provided for the user, to let the user input a specific date, time and other information, thereby determining a target time point. To facilitate the user's operations, a corresponding selection control such as a drop-down list may be provided for each input box, so that the user can directly input the time by way of selection. Moreover, the first database may only store data of the recent one or several days. Thus, when the drop-down list is provided, options of selectable date, time, and the like may be set based on the data recorded in the first database. For example, the first database only records data of the recent two days, and if the current date is 30^{th}, only two options, that is, 28^{th} and 29^{th}, can be set in the selectable date, and so on.

In another preferred implementation manner, an operation interface for selecting a target time point may be further provided for the user. The operation interface is provided with an operable object and time scale information. On the operation interface, a certain operation may be carried out on the operable object, such as dragging and the like. If the user wants to query geographic location information at a certain time point, the user may drag or slide the operable object to a corresponding time scale. Correspondingly, the client can detect an event that the operable object is operated, a location of the operable object in a dial, a corresponding scale value, and so on, thereby determining a target time point that needs to be queried by the user. In the specific implementation, preferably, the operation interface may be displayed in a shape of "a dial plate", the time scale may be displayed like a clock, and the operable object may be displayed in a shape similar to "an hour pointer". Accordingly, through dragging the operable object, the user can simulate an action of "swinging" "the hour pointer" of the dial plate, thereby selecting a target time point that needs to be queried specifically. When the operation interface is provided, the operation interface may also be provided based on information recorded in the first database. For example, the range of a time scale in the dial plate may be determined based on a time range stored in the first database.

S104: Query the first database and determine target geographic location information corresponding to the target time point;

After a target time point that needs to be queried by the user is determined, the first database can be queried. Based on a correspondence between the geographic location information and time information recorded in the first database, target geographic location information corresponding to the target time point is determined. According to different forms of the target geographic location information stored in the first database, the acquired target geographic location information may be positioning information represented by using coordinates such as longitude and latitude, or may also be site information represented by an identification of a site such as the name of the site.

S105: Acquire target map data corresponding to the target geographic location information from a preset map database;
A map database may be downloaded locally in advance, or may be downloaded temporarily according to actual requirements. Generally, a map data packet in a certain regional range may be downloaded based on administrative regions at levels of provinces, cities, and so on. For example, for a user in Beijing, generally, data about Beijing city is most commonly used. Thus, the user may only download a map data packet of Beijing city, and so on. In the specific implementation, the map database may be separately provided by a map application, or may be integrated in an application client in the embodiment of the present application. To sum up, in the circumstance that a map database has been stored locally, a specific geographic location can be generally queried not only through specific coordinates and so on, but also through an identification of a site such as the name of the site. Therefore, in the embodiment of the present application, after target geographic location information corresponding to the target time point is acquired from the first database, a map database can be queried through the target geographic location information. Thus, the map database can provide map data of the corresponding location.

S106: Load the target map data for display on a user interface.

After the target map data is acquired, the data can be loaded and displayed on a user interface. Moreover, specific coordinates or the location of a site can be highlighted on the interface. That is to say, when the user needs to query places the user went to at a certain time point in the past, the user can select the time point that he/she needs to query, through an application client provided in the embodiment of the present application, and then, the application client can provide a map on a user interface, and identify the specific target location corresponding to the time point on the map interface. If the location information is represented by a site identification, the identification of the site such as the name can be displayed while the specific location is marked in the map, which helps the user to recall things that were done at past more vividly.

It should be noted that, as mentioned above, in order to facilitate the user to select a target time point that needs to be queried, the embodiment of the present application can provide an operation interface such as a dial plate for the user. In the specific implementation, once a request for querying geographic location information is received, map data can be loaded and displayed on a lower level interface of the operation interface. Definitely, in this case, the operation interface may be displayed in a semi-transparent state, or parts except the operable object and time scale are displayed in a transparent state to avoid shading the map interface on the lower level. In addition, when no signal indicating that the operable object is operated is detected, the map data may be in an initial state. For example, a central region of the map is displayed on the screen or a current location of the user is displayed on the screen. Then, as the user drags the operable object, a target time point is determined, and then, based on the determined target map data, the lower interface van be refreshed and displayed. Definitely, as the operable object is dragged, a moving effect may also be displayed in the map on the lower level correspondingly.

To sum up, through Embodiment 1 of the present application, a correspondence between geographic location information of a user and time information can be recorded, and then, the user can query the places the user went to at a certain history time point through designating the time point to be queried, and can display the places on a map, which can help the user to recall the places the user went to in the past and the time the user went to the places, and the user does not need to perform manual operations like recording.

### Embodiment 2

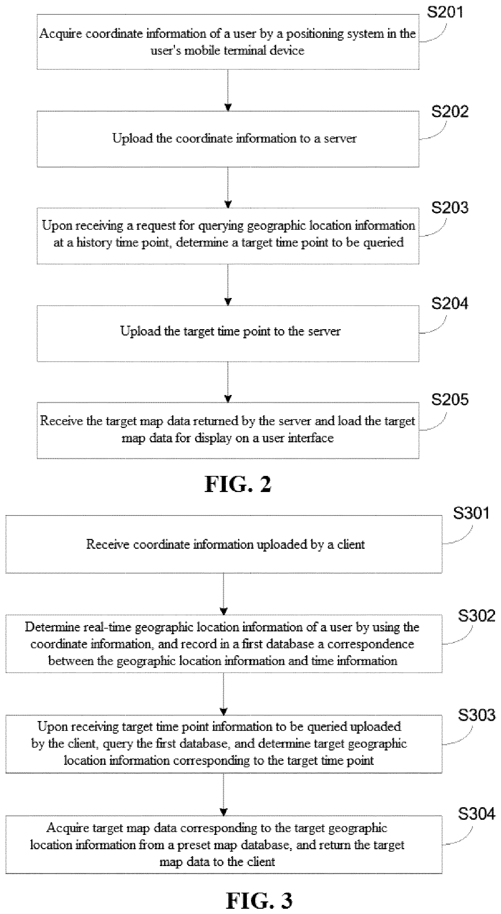

In Embodiment 2, the first database, the second database, and the map database mentioned above are all stored in a server. The client may upload coordinate information of a terminal device to the server periodically, and then, the server stores the coordinate information in the first database. When conducting query, the client uploads, to the server, time point information selected by the user, and then, according to map data returned by the server, loads and displays the map data. Referring to FIG. 2, Embodiment 2 provides an information prompting method in a terminal device. The method is applied to a client, which may specifically include the following steps:
S201: Determine coordinate information of a user by a positioning system in the user's mobile terminal device;
S202: Upload the coordinate information to a server, to enable the server to acquire geographic location information of the user, and record in a first database a correspondence between the geographic location information and time information;
   Once acquiring the user's coordinate information, the client may directly upload the coordinate information to the server. Then, the server determines geographic location information of the user, and stores in the first database a correspondence between the geographic location information and time information. Then implementation manner in which the server determines specific geographic location information according to the coordinate information may be the same as the specific implementation of the client as described in Embodiment 1, which will not be described herein repeatedly. Definitely, as for the server, the scale of the second database (that is, correspondence between site identifications and coordinate information in the regional range of the site) stored therein may be larger than that stored in the client, and the first database may store data for a longer time.
S203: Upon receiving a request for querying geographic location information at a history time point, determine a target time point to be queried;
   The specific manner for determining the target time point may be the same as that in Embodiment 1, which will not be described herein repeatedly.
S204: Upload the target time point to the server, to enable the server, through querying the first database, to determine target geographic location information corresponding to the target time point, and acquire target map data corresponding to the target geographic location information from a preset map database;
   Once determining the target time point, the client uploads the target time point to the server. Then, the server determines corresponding target geographic location and map data corresponding to the target geographic location, and returns them to the client.
S205: Receive the target map data returned by the server and load the target map data for display on a user interface.

Finally, the client can load and display the map data according to the map data returned by the server. Thus, the user can directly figure out the geographic location at the target time point at past by the displayed map data, thereby helping the user to recall things.

It should be noted that Embodiment 2 is different from Embodiment 1 merely in that some steps are performed by different execution bodies, but the specific implementation manners may be the same. Therefore, reference can be made to the introduction in Embodiment 1 for the relevant implementation.

### Embodiment 3

Corresponding to Embodiment 2, Embodiment 3 further provides an information prompting method from the perspective of the server. Referring to FIG. 3, the method may specifically include the following steps:
S301: receiving coordinate information uploaded by a client;
S302: determining real-time geographic location information of a user by using the coordinate information, and recording in a first database a correspondence between the geographic location information and time information;
S303: upon receiving target time point information to be queried uploaded by the client, querying the first database, and determining target geographic location information corresponding to the target time point; and
S304: acquiring target map data corresponding to the target geographic location information from a preset map database, and returning the target map data to the client, to enable the client to load the target map data for display on a user interface.

Embodiment 3 is corresponding to Embodiment 2, but merely has a different perspective of description. Therefore, reference can be made to the introduction in Embodiment 2 and Embodiment 1 for the relevant implementation details, which will not be described herein repeatedly.

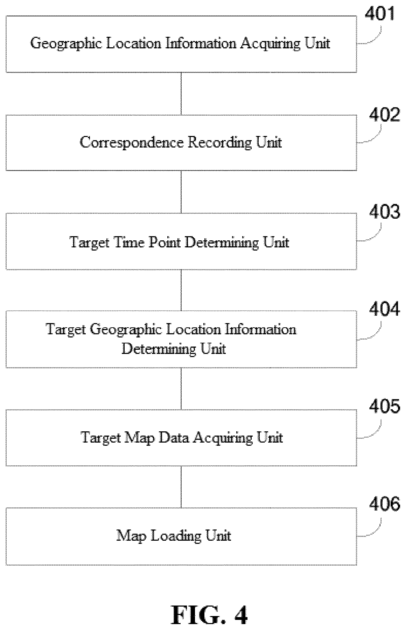

Corresponding to the information prompting method in a terminal device provided in Embodiment 1 of the present application, an embodiment of the present application further provides an information prompting apparatus in a terminal device. Referring to FIG. 4, the apparatus may include:
a geographic location information acquiring unit 401, for acquiring geographic location information of a user;
a correspondence recording unit 402, for recording in a first database a correspondence between the geographic location information and time information;
a target time point determining unit 403, for, upon receiving a request for querying geographic location information at a history time point, determining a target time point to be queried;
a target geographic location information determining unit 404, for querying the first database and determining target geographic location information corresponding to the target time point;
a target map data acquiring unit 405, for acquiring target map data corresponding to the target geographic location information from a preset map database; and
a map loading unit 406, for loading the target map data for display on a user interface.

In a specific implementation manner, the geographic location information acquiring unit 401 is specifically used for:
acquiring coordinate information by a positioning system in the user's mobile terminal device, and determining the coordinate information as the geographic location information;
Correspondingly, the correspondence recording unit 402 may be specifically used for:
   recording in the first database a correspondence between the coordinate information and time information.

Alternatively, in another specific implementation manner, the geographic location information acquiring unit 401 is specifically used for:
acquiring the coordinate information by a positioning system in a mobile terminal device used by the user;
querying a second database by using the coordinate information, determining site identification information of the user, and determining the site identification information as the geographic location information; wherein the second database stores correspondences between each site identification and coordinate information of a site range;

Correspondingly, the correspondence recording unit 402 may be specifically used for:
recording in the first database a correspondence between the site identification information and time information.

The apparatus may further include:
a time period determining unit, for determining a time period when the user is within the same site; and
the correspondence recording unit 402 may be specifically used for:
   recording in the first database a correspondence between the site identification information and a start time and an end time of the time period.

When the target map data is loaded and is provided for the user on a user interface, the apparatus may further include:
a site identification providing unit, for providing the site identification information for the user.

In addition, the apparatus may further include:
a moving state acquiring unit, for acquiring moving state information of the user; and
the correspondence recording unit 402 may be specifically used for:
   recording in the first database a correspondence between geographic location information, acquired in a state where a moving speed is lower than a preset threshold value, and time information.

In addition, the apparatus may further include:
an operation interface providing unit, for, upon receiving a request for querying geographic location information at a history time point, providing, on a user interface, the user with an operation interface for selecting a target time point, wherein the operation interface is provided with an operable object and time scale information; and
the target time point unit 403 may be specifically used for:
   when a signal indicating that the operable object is operated is detected, determining a target time scale corresponding to the operable object, and determining a time corresponding to the target time scale as the target time point.

The operation interface is in a semi-transparent state, and the apparatus may further include:
an initial map displaying unit, for loading a map data on a lower level interface of the operation interface, and displaying the map data, wherein, when no signal indicating that the operable object is operated is detected, the map is in an initial state; and
a refreshing and displaying unit, for, when a signal indicating that the operable object is operated is detected, using the target map data corresponding to the determined target geographic location, loading the target map data, and refreshing and displaying the map on the lower level interface.

The apparatus may further include:
a moving effects displaying unit, for providing moving effects of a map during refreshing and displaying on the lower level interface.

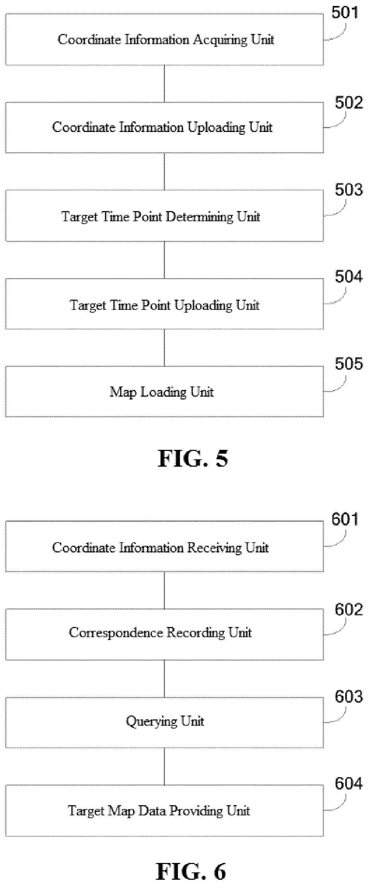

Corresponding to the information prompting method in a terminal device provided in Embodiment 2 of the present application, the embodiment of the present application further provides an information prompting apparatus in a terminal device. Referring to FIG. 5, the apparatus may specifically include:
a coordinate information acquiring unit 501, for acquiring coordinate information of a user by a positioning system in the user's mobile terminal device;
a coordinate information uploading unit 502, for uploading the coordinate information to a server, to enable the server to acquire geographic location information of the user, and recording in a first database a correspondence between the geographic location information and time information;
a target time point determining unit 503, for, upon receiving a request for querying geographic location information at a history time point, determining a target time point to be queried;
a target time point uploading unit 504, for uploading the target time point to the server, to enable the server, through querying the first database, to determine target geographic location information corresponding to the target time point, and acquiring target map data corresponding to the target geographic location information from a preset map database; and
a map loading unit 505, for receiving target map data returned by the server and loading the target map data for display on a user interface.

Corresponding to the information prompting method provided in Embodiment 3 of the present application, the embodiment of the present application further provides an information prompting apparatus. Referring to FIG. 6, the apparatus may specifically include:
a coordinate information receiving unit 601, for receiving coordinate information uploaded by a client;
a correspondence recording unit 602, for determining real-time geographic location information of a user by using the coordinate information, and recording in a first database a correspondence between the geographic location information and time information;
a querying unit 603, for, upon receiving target time point information to be queried uploaded by the client, querying the first database, and determining target geographic location information corresponding to the target time point; and
a target map data providing unit 604, for acquiring target map data corresponding to the target geographic location information from a preset map database, and returning the target map data to the client, to enable the client to load the target map data for display on a user interface.

Through the embodiment of the present application, a correspondence between geographic location information of the user and time information can be recorded, and then, through designating a time point to be queried, the user can query a place the user went to at a certain time point in the past, and can display the place in a map. Thus, it can help the user to recall the places the user went to in the past and the time the user went to the places, and the user does not need to perform manual operations like recording.

It can be known through the above description of the implementation manners that it is apparent to those skilled in the art that the present application may be accomplished by software plus a necessary universal hardware platform. Based on such understanding, the above technical solution of the present application or the part that makes contributions to the prior art can be substantially embodied in the form of a software product. The computer software product may be stored in a storage medium such as an ROM/RAM, a magnetic disk, or an optical disk, and include several instructions to instruct a computer device (which may be a personal computer, a server, a network device or the like) to perform the method as described in the embodiments of the present application or in some parts of the embodiments.

The embodiments in the specification are described in a progressive manner, mutual reference can be made to the same or similar parts between the embodiments, and each embodiment focuses on describing differences between the embodiment and other embodiments. In particular, for systems or system embodiments, the description is relatively simple as it is basically similar to the process embodiments; please refer to the description of the process embodiment for related content. The systems or system embodiments described above are merely schematic, in which the units described as separate parts may be or may not be physically separated, and the parts displayed as units may be or may not be physical units, which may be located in the same position and may also be distributed onto a plurality of network units. It is possible to select some or all of the modules according to actual needs to achieve the objectives of the solutions of the embodiments. Those of ordinary skill in the art can understand and implement the present application without making any creative efforts.

The information prompting method and apparatus in a terminal device according to the present application are introduced in detail above. The principle and implementation manners of the present application are described herein through specific examples. The above description about the embodiments is merely provided for ease of understanding of the method and core ideas of the present application; at the same time, those of ordinary skill in the art can make variations to the present application in terms of the specific implementation manners and application scopes according to the ideas of the present application. Therefore, the contents of the specification shall not be construed as limitations to the present application.

## Claims

1. An information prompting method in a terminal device, comprising:
acquiring geographic location information of a user;
recording in a first database a correspondence between the geographic location information and time information;
upon receiving a request for querying geographic location information at a history time point, determining a target time point to be queried;
querying the first database and determining target geographic location information corresponding to the target time point;
acquiring target map data corresponding to the target geographic location information from a preset map database; and
loading the target map data for display on a user interface.

2. The method according to claim 1, wherein the acquiring geographic location information of a user comprises:
acquiring coordinate information by a positioning system in the user's mobile terminal device, and determining the coordinate information as the geographic location information; and
wherein the recording in a first database a correspondence between the geographic location information and time information comprises:
recording in the first database a correspondence between the coordinate information and time information.

3. The method according to claim 1, wherein the acquiring geographic location information of a user in real time comprises:
acquiring coordinate information by a positioning system in a mobile terminal device used by the user;
querying a second database by using the coordinate information, determining site identification information of the user, and determining the site identification information as the geographic location information, wherein the second database stores a correspondence between each site identification and coordinate information of a site range;
wherein the recording in a first database a correspondence between the geographic location information and time information comprises:
recording in the first database a correspondence between the site identification information and time information.

4. The method according to claim 3, further comprising:
determining a time period when the user is in the same site;
wherein the recording in a first database a correspondence between the site identification information and time information comprises:
recording in the first database a correspondence between the site identification information and a start time and an end time of the time period.

5. The method according to claim 3, when loading the target map data for display on a user interface, further comprising:
providing the site identification information for the user.

6. The method according to any of claims 1 to 5, further comprising:
acquiring moving state information of the user; and
wherein the recording in a first database a correspondence between the geographic location information and time information comprises:
recording in the first database a correspondence between geographic location information, acquired in a state where a moving speed is lower than a preset threshold value, and time information.

7. The method according to any of claims 1 to 5, further comprising:
upon receiving a request for querying geographic location information at a history time point, providing, on a user interface, the user with an operation interface for selecting a target time point, wherein the operation interface is provided with an operable object and time scale information; and
wherein the determining a target time point to be queried comprises:
when a signal indicating that the operable object is operated is detected, determining a target time scale corresponding to the operable object, and determining a time corresponding to the target time scale as the target time point.

8. The method according to claim 7, wherein the operation interface is in a semi-transparent state, the method further comprising:
loading map data on a lower level interface of the operation interface and displaying the map data, wherein, when no signal indicating that the operable object is operated is detected, the map data is in an initial state; and
when a signal indicating that the operable object is operated is detected, using target map data corresponding to the determined target geographic location, loading the target map data, and refreshing and displaying on the lower level interface.

9. The method according to claim 8, further comprising:
providing moving effects of a map during refreshing and displaying on the lower level interface.

10. An information prompting method in a terminal device, comprising:
acquiring coordinate information of a user by a positioning system in the user's mobile terminal device;
uploading the coordinate information to a server, to enable the server to acquire geographic location information of the user, and recording in a first database a correspondence between the geographic location information and time information;
upon receiving a request for querying geographic location information at a history time point, determining a target time point to be queried;
uploading the target time point to the server, to enable the server, through querying the first database, to determine target geographic location information corresponding to the target time point, and acquiring target map data corresponding to the target geographic location information from a preset map database; and
receiving the target map data returned by the server and loading the target map data for display on a user interface.

11. An information prompting method, comprising:
receiving coordinate information uploaded by a client;
determining real-time geographic location information of a user by using the coordinate information, and recording in a first database a correspondence between the geographic location information and time information;
upon receiving target time point information to be queried uploaded by the client, querying the first database, and determining target geographic location information corresponding to the target time point; and
acquiring target map data corresponding to the target geographic location information from a preset map database, and returning the target map data to the client, to enable the client to load the target map data for display on a user interface.

12. An information prompting apparatus in a terminal device, comprising:
a geographic location information acquiring unit, for acquiring geographic location information of a user;
a correspondence recording unit, for recording in a first database a correspondence between the geographic location information and time information;
a target time point determining unit, for, upon receiving a request for querying geographic location information at a history time point, determining a target time point to be queried;
a target geographic location information determining unit, for querying the first database and determining target geographic location information corresponding to the target time point;
a target map data acquiring unit, for acquiring target map data corresponding to the target geographic location information from a preset map database; and
a map loading and displaying unit, for loading the target map data for display on a user interface.

13. An information prompting apparatus in a terminal device, comprising:
a coordinate information acquiring unit, for acquiring coordinate information of a user by a positioning system in the user's mobile terminal device;
a coordinate information uploading unit, for uploading the coordinate information to a server, to enable the server to acquire geographic location information of the user, and recording in a first database a correspondence between the geographic location information and time information;
a target time point determining unit, for, upon receiving a request for querying geographic location information at a history time point, determining a target time point to be queried;
a target time point uploading unit, for uploading the target time point to the server, to enable the server, through querying the first database, to determine target geographic location information corresponding to the target time point, and acquiring target map data corresponding to the target geographic location information from a preset map database; and
a map loading unit, for receiving the target map data returned by the server and loading the target map data for display on a user interface.

14. An information prompting apparatus, comprising:
a coordinate information receiving unit, for receiving coordinate information uploaded by a client
a correspondence recording unit, for determining real-time geographic location information of a user by using the coordinate information, and recording in a first database a correspondence between the geographic location information and time information;
a querying unit, for, upon receiving target time point information to be queried uploaded by the client, querying the first database, and determining target geographic location information corresponding to the target time point; and
a target map data providing unit, for acquiring target map data corresponding to the target geographic location information from a preset map database, and returning the target map data to the client, to enable the client to load the target map data for display on a user interface.
